Europäisches Patentamt

European Patent Office

Office européen des brevets

(19)

(11) Numéro de publication : **0 278 804 B1**

(12) **FASCICULE DE BREVET EUROPEEN**

(45) Date de publication du fascicule du brevet :
31.07.91 Bulletin 91/31

(51) Int. Cl.⁵ : **B29C 47/06**

(21) Numéro de dépôt : 88400072.0

(22) Date de dépôt : 14.01.88

(54) Procédé de fabrication de films à partir de polymères fluides semi-cristallins, par coextrusion et soufflage de gaine.

(30) Priorité : 21.01.87 FR 8700667

(43) Date de publication de la demande :
17.08.88 Bulletin 88/33

(45) Mention de la délivrance du brevet :
31.07.91 Bulletin 91/31

(84) Etats contractants désignés :
AT BE DE FR GB IT NL SE

(56) Documents cités :
DE-A- 2 938 462
PATENT ABSTRACTS OF JAPAN, vol. 7, no. 79
(M-204)[1224], 31 mars 1983; & JP-A-58 5226
(TOPPAN INSATSU K.K.) 12-01-1983
PLASTICS & RUBBER INTERNATIONAL, vol.
10, no. 1, février 1985, pages 24-28, Londres,
GB; D.T. DAGLEISH: "Coextruded high barrier
films"

(56) Documents cités :
KUNSTSTOFFE, vol. 71, no. 9, septembre 1981,
pages 530-538, Munich, DE; F. HENSEN et al.:
"Entwicklungsstand bei der Coextrusion von
Mehrschichtblasfolien und Mehrschichtbreitschlitzfolien"
PATENT ABSTRACTS OF JAPAN, vol. 11, no.
14 (M-553)[2461], 14 janvier 1986; & JP-A-61
189 919 (SHOWA DENKO K.K.) 23-08-1986

(73) Titulaire : ATOCHEM
4 & 8, Cours Michelet La Défense 10
F-92800 Puteaux (FR)

(72) Inventeur : Moulies, Jean-Claude
15, Parc de Maubuisson
F-27470 Serquigny (FR)
Inventeur : Reignier, Gérard
Fontaine-l'Abbé
F-27470 Serquigny (FR)

(74) Mandataire : Foiret, Claude et al
ATOCHEM, Département Propriété
Industrielle, La Défense 10, Cédex 42
F-92091 Paris La Défense (FR)

## Description

La présente invention concerne un procédé de fabrication de films par le procédé d'extrusion et soufflage à partir de polymères fluides semi-cristallins consistant à coextruder le polymère fluide semi-cristallin avec une résine thermoplastique non compatible.

Les films de polymères thermoplastiques de faible épaisseur sont habituellement obtenus par le procédé d'extrusion et soufflage consistant à extruder, généralement de bas en haut, un polymère thermoplastique à travers une filière annulaire, l'extrudant étant simultanément tiré longitudinalement par un dispositif de tirage, habituellement à rouleaux, et gonflé par un volume d'air constant emprisonné entre la filière, le système de tirage et la paroi de la gaine. La gaine gonflée, encore appelée bulle, est refroidie généralement par un anneau de soufflage d'air à la sortie de la filière. La bulle mise à plat est enroulée, soit sous forme de gaine, soit après découpe en deux films séparés.

Ce procédé classique est pour le moins délicat, sinon impossible à utiliser dans le cas d'extrusion et soufflage de gaines de polymères fluides semi-cristallins. Dans ce cas les forces mises en jeu, telles que force de tirage, pression interne de la bulle, gravité et autres s'appliquent à un extrudat dont la résistance mécanique est très faible. Il en résulte des déformations importantes de la bulle conduisant à la formation de plis sur le film après la mise à plat de la bulle, ainsi qu'à l'absence totale de la maitrise de la répartition d'épaisseur du film.

La technique selon l'invention permet de résoudre ces inconvénients et de réaliser des films de polymères fluides semi-cristallins d'épaisseurs régulières et contrôlées. Le procédé perfectionné consiste par le procédé de coextrusion et soufflage à coextruder le polymère fluide semi-cristallin avec une résine thermoplastique qui est incompatible de façon telle qu'après refroidissement et mise à plat de la bulle on récupère séparément les deux films extrudés par des moyens classiques, tel que par enroulement distinct des films séparés.

On entend par polymères fluides semi-cristallins les polyamides dont la viscosité à l'état fondu est faible, soit dans le cadre de l'invention de préférence inférieure à $10^3$ Pa · s dans les conditions de l'écoulement en filière, et susceptibles de développer à l'état solide une cristallinité importante, en général supérieure à 10%. Lorsque la fusion cristalline intervient, la viscosité de ces polymères chute brutalement. A titre d'exemple on peut citer les polyamides et leurs copolymères, les polyesters tels que le polybutylene téréphtalate (PBT) ou le polyéthylène téréphtalate (PET) et leurs copolymères, le polypropylène, le polyfluorure de vinylidène et ses copolymères, les copolymères éthylène-ester d'hydroxyalkyle (EVOH).

La résine thermoplastique incompatible ne doit avoir aucune affinité, et en particulier aucune affinité d'adhérence, avec le polymère fluide semi-cristallin. Cette résine doit être telle qu'une fois coextrudée avec le polymère fluide semi-cristallin son film puisse être séparé sans effort du film de polymère, ce qui signifie une absence totale d'adhésion entre les deux matériaux. Cette résine servant de support au polymère semi-cristallin pendant l'extrusion et soufflage doit bien entendu posséder une tenue d'extrudat, c'est-à-dire une résistance à chaud de la matière fondue, suffisante pour supporter les contraintes de l'extrusion et soufflage et le polymère semi-cristallin. Pour cela cette résine doit posséder une viscosité à l'état fondu relativement élevée, de l'ordre de $10^3$ à $10^4$ Pa · s sous une vitesse de cisaillement de 100 s$^{-1}$, ainsi qu'une bonne résistance au cisaillement et à la traction.

Parmi les résines susceptibles d'être utilisées on peut citer à titre d'exemples les polyéthylènes haute pression, le polystyrène choc, le polychlorure de vinyle plastifié.

Selon le procédé de l'invention, il est possible de fabriquer des films de polymère fluides semi-cristallins de faible épaisseur, de l'ordre de 10 à 200 microns avec une régularité d'épaisseur de ± 15%.

Les épaisseurs relatives des matières extrudées au niveau de l'extrudat sont ajustées d'une part en fonction de l'épaisseur finale souhaitée pour le polymère semi-cristallin, d'autre part en fonction de la tenue de la bulle pour la résine non compatible. D'une manière générale l'épaisseur du film de polymère non compatible est de 0,5 à 10 fois, et mieux 1 à 5 fois supérieure à celle du film de polymère semi-cristallin.

Selon la technique d'extrusion et soufflage décrite précédemment on coextrude simultanément le polymère fluide semi-cristallin et la résine thermoplastique incompatible. Après refroidissement de la bulle, la matériau coextrudé se présente sous la forme d'une gaine que l'on aplatit et découpe longitudinalement de façon à obtenir une superposition de films de polymère semi-cristallin et de résine thermoplastique incompatible. Ces différents films sont séparés et stockés séparément, comme par exemple par enroulement sur des bobines distinctes.

L'extrusion et soufflage consistant à former une gaine, peu importe que le film de résine thermoplastique se trouve à l'intérieur ou à l'extérieur de la gaine. Il n'est par ailleurs pas exclu de coestruder plus de deux films. En outre si on ne souhaite pas conserver le film support de résine thermoplastique, il est possible de le recycler dans le système pour former un nouveau film support.

L'exemple suivant illustre l'invention sans le limiter.

## EXEMPLE

A partir d'une ligne de coextrusion et soufflage constituée de : deux extrudeuses de diamètre 45 mm., équipées de vis de rapport longueur-diamètre égal à 20 alimentant une filière annulaire de diamètre 150 mm., avec un entrefer de sortie égal à 1 mm., on extrude de la première extrudeuse à une température de 250°C du polyfluorure de vinylidène (Foraflon 1000 HD) de façon à former une couche externe de 25 microns et de la seconde extrudeuse à une température de 230°C du polyéthylène basse densité d'indice de fusion MI = 0,3 et de densité de 0,923 de façon à former une couche interne de 60 microns. On insuffle dans le système une pression d'air de façon à former une gaine de 225 mm. de diamètre. La gaine est refroidie par un anneau de soufflage d'air posé sur la filière, puis par l'air ambiant sur son parcours entre l'anneau et les rouleaux tireurs. Après mise à plat la gaine est découpée en films sur un enrouleur. En extrémité chacun des films de polyfluorure de vinylidène et de polyéthylène sont bobinés séparément.

Le film de polyfluorure de vinylidène obtenu possède une épaisseur de 23 microns avec une tolérance de ± 3 microns.

## Revendications

1. Procédé de fabrication de films de polymères thermoplastiques par coextrusion caractérisé en ce que par extrusion et soufflage on coextrude au moins deux polymères thermoplastiques, un des polymères étant un polymère fluide semi-cristallin, un autre polymère thermoplastique incompatible avec le polymère fluide semi-cristallin, possédant une teneur d'extrudat suffisante pour supporter le polymère semi-cristallin et en ce que après refroidissement du coextrudat, par séparation des films formés, on récupère au moins le film de polymère thermoplastique semi-cristallin.

2. Procédé selon la revendication 1 caractérisé en ce que le polymère thermoplastique semi-cristallin possède une viscosité à l'état fondu inférieure à $10^3$ Pa · s dans les conditions de l'écoulement en filière.

3. Procédé selon i'une des revendications 1 ou 2 caractérisé en ce que le polymère thermoplastique semi-cristallin possède à l'état solide une cristallinité supérieure à 10%.

4. Procédé selon l'une des revendications 1 à 3 caractérisé en ce que l'épaisseur du film de polymères incompatible avec le polymère fluide semi-cristallin est de 0,5 à 10 fois supérieure à celle du film de ce dernier.

5. Procédé selon l'une des revendications 1 à 4 caractérisé en ce que le polymère fluide semi-cristallin est choisi parmi les polyamides et leurs copolymères, les polyesters et leurs copolymères, le polyfluorure de vinylidène et ses copolymères, le polypropylène et les copolymères éthylène-ester d'hydroxyalkyle.

6. Procédé selon l'une des revendications 1 à 5 caractérisé en ce que le polymère incompatible est choisi parmi les polyéthylènes haute pression, le polystyrène choc, le polychlorure de vinyle plastifié.

7. Film de polymère thermoplastique semi-cristallin obtenu selon l'une des revendications 1 à 6 caractérisé en ce qu'il possède une épaisseur de 10 à 200 microns à plus ou moins 15%.

## Patentansprüche

1. Verfahren zur Herstellung von thermoplastischen Polymerfolien durch Coextrusion, dadurch gekennzeichnet, daß man wenigstens zwei thermoplastische Polymere durch Extrusion und Blasformen coextrudiert, wobei eines der Polymere ein fließfähiges halbkristallines Polymeres ist, ein anderes, mit dem fließfähigen halbkristallinen Polymeren unverträgliches, thermoplastisches Polymeres einen Extrudatanteil besitzt, der zum Tragen des halbkristallinen Polymeren ausreicht, und daß man nach dem Abkühlen des Coextrudats wenigstens die halbkristalline thermoplastische Polymerfolie durch Trennung der gebildeten Folien gewinnt.

2. Verfahren nach Anspruch 1, dadurch gekennzeichnet, daß das halbkristalline thermoplastische Polymere im geschmolzenen Zustand unter den Bedingungen des Fließens durch eine Düse eine Viskosität aufweist, die niedriger als $10^3$ Pa · s ist.

3. Verfahren nach Anspruch 1 oder 2, dadurch gekennzeichnet, daß das halbkristalline thermoplastische Polymere im festen Zustand einen Kristallisationsanteil aufweist, der höher als 10% ist.

4. Verfahren nach einem der Ansprüche 1 bis 3, dadurch gekennzeichnet, daß die Foliendicke der Polymeren, die mit dem fließfähigen halbkristallinen Polymeren unverträglich sind, 0,5- bis 10 mal höher als die der Folie aus letzterem ist.

5. Verfahren nach einem der Ansprüche 1 bis 4, dadurch gekennzeichnet, daß das fließfähige halbkristalline Polymere aus Polyamiden und ihren Copolymeren, Polyestern und ihren Copolymeren, Polyvinylidenfluorid und seinen Copolymeren, Polypropylen und Ethylen-Hydroxyalkylester-Copolymeren ausgewählt ist.

6. Verfahren nach einem der Ansprüche 1 bis 5, dadurch gekennzeichnet, daß das unverträgliche Polymere aus Hochdruckpolyethylenen, schlagfestem Polystyrol und weichgemachtem Polyvinylchlorid ausgewählt ist.

7. Halbkristalline thermoplastische Polymerfolie, erhalten nach einem der Ansprüche 1 bis 6, dadurch gekennzeichnet, daß sie eine Dicke von 10 bis 200 µm ± 15% aufweist.

## Claims

1. Process for the manufacture of thermoplastic polymer films by coextrusion, characterised in that at least two thermoplastic polymers are coextruded by extrusion and blowing, one of the polymers being a semicrystalline fluid polymer, one other thermoplastic polymer incompatible with the semicrystalline fluid polymer, having a sufficient extrudate strength to support the semicrystalline polymer, and in that after cooling of the coextrudate, by separating the films formed, at least the semicrystalline thermoplastic polymer film is recovered.

2. Process according to Claim 1, characterised in that the semicrystalline thermoplastic polymer has a melt viscosity which is lower than $10^3$ Pa s under the die flow conditions.

3. Process according to either of Claims 1 and 2, characterised in that the semicrystalline thermoplastic polymer has a crystallinity which is higher than 10% in the solid state.

4. Process according to one of Claims 1 to 3, characterised in that the thickness of the film of polymers which is incompatible with the semicrystalline fluid polymer is from 0.5 to 10 times greater than that of the film of the latter.

5. Process according to one of Claims 1 to 4, characterised in that the semicrystalline fluid polymer is chosen from polyamides and their copolymers, polyesters and their copolymers, polyvinylidene fluoride and its copolymers, polypropylene and ethylene/hydroxyalkyl ester copolymers.

6. Process according to one of Claims 1 to 5, characterised in that the incompatible polymer is chosen from high-pressure polyethylenes, impact-grade polystyrene and plasticized polyvinyl chloride.

7. Semicrystalline thermoplastic polymer film obtained according to one of Claims 1 to 6, characterised in that it has a thickness of 10 to 200 microns within plus or minus 15%.